# FASCICULE DE BREVET EUROPEEN

(11) **EP 3 391 080 B1**
(45) Date de publication et mention de la délivrance du brevet: **30.06.2021**
(21) Numéro de dépôt: 16825531.3
(22) Date de dépôt: 16.12.2016
(51) Int. Cl.: G01S 13/95, G01S 13/89, G01S 13/58, G01S 13/42, G01S 7/41

(54) **PROCÉDÉ D'ESTIMATION SPECTRALE DU FOUILLIS D'UN MILIEU LIQUIDE HALIN**
VERFAHREN ZUR SPEKTRALEN SCHÄTZUNG DER STÖRUNGEN EINES HALINEN FLÜSSIGEN MEDIUMS
METHOD FOR SPECTRAL ESTIMATION OF THE CLUTTER OF A HALINE LIQUID MEDIUM

(30) Priorité: 16.12.2015 FR 1562550
(43) Date de publication de la demande: 24.10.2018
(73) Titulaire: SUEZ Groupe, 92040 Paris la Défense Cedex (FR)
(72) Inventeur: SICOT, Guillaume, 29860 Plouvien (FR); THOMAS, Nicolas, 29400 Plouneventer (FR)
(74) Mandataire: Ipside
(86) Numéro de dépôt international: PCT/FR2016/053487
(87) Numéro de publication internationale: WO 2017/103517

(56) Documents cités:
- CN-Y- 2 441 229
- US-A- 5 469 168
- US-A1- 2003 058 153
- GAO H T ET AL: "Adaptive anti-interference technique using subarrays in HF surface wave radar", IEE PROCEEDINGS: RADAR, SONAR & NAVIGATION, INSTITUTION OF ELECTRICAL ENGINEERS, GB, vol. 151, no. 2, 9 avril 2004 (2004-04-09) , pages 100-104, XP006021676, ISSN: 1350-2395, DOI: 10.1049/IP-RSN:20040519
- THOMAS HELZEL ET AL: "Accuracy and reliability of ocean radar WERA in beam forming or direction finding mode", CURRENT, WAVES AND TURBULENCE MEASUREMENTS (CWTM), 2011 IEEE/OES 10TH, IEEE, 20 mars 2011 (2011-03-20), pages 21-24, XP031861205, DOI: 10.1109/CWTM.2011.5759518 ISBN: 978-1-4244-9285-5
- GURGEL K ET AL: "HF surface wave radar for oceanography - a review of activities in Germany", RADAR CONFERENCE, 2003. PROCEEDINGS OF THE INTERNATIONAL ADELAIDE, SA, AUSTRALIA 3-5 SEPT. 2003, PISCATAWAY, NJ, USA,IEEE, US, 3 septembre 2003 (2003-09-03), pages 700-705, XP010690735, DOI: 10.1109/RADAR.2003.1278828 ISBN: 978-0-7803-7870-4
- QUANDE WANG ET AL: "Active Learning Artificial Neural Networks Ensemble for HF Ground Wave Radar Sea Clutter Predicting", COMPUTATIONAL INTELLIGENCE AND SOFTWARE ENGINEERING, 2009. CISE 2009. INTERNATIONAL CONFERENCE ON, IEEE, PISCATAWAY, NJ, USA, 11 décembre 2009 (2009-12-11), pages 1-4, XP031591111, ISBN: 978-1-4244-4507-3
- HELZEL T ET AL: "Software beam forming for ocean radar WERA features and accuracy", OCEANS 2010, IEEE, PISCATAWAY, NJ, USA, 20 septembre 2010 (2010-09-20), pages 1-3, XP031832614, ISBN: 978-1-4244-4332-1

## Description

### DOMAINE TECHNIQUE DE L'INVENTION

La présente invention concerne un procédé d'estimation spectrale du fouillis d'un milieu liquide halin (i.e. salinité non nulle), tel qu'un lac, une mer ou un océan. Elle s'applique, en particulier, au domaine de l'observation océanographique côtière par radar et s'étend également à l'observation de lac et de fleuve.

On entend par « Estimation spectrale » une technique d'estimation de la densité spectrale de puissance d'un signal.

L'invention concerne plus précisément une technique de traitement du signal radar appliquée au fouillis de mer reçu par des radars océanographiques côtiers Doppler à réseaux d'antennes fonctionnant sur les bandes électromagnétiques HF ou VHF (High Frequency pour haute fréquence ou Very High Frequency pour très haute fréquence) soit entre 3 MHz et 300 MHz.

Dans ce document on entend par « fouillis de mer » la part du signal radar traité provenant de la rétrodiffusion du signal radar incident par la surface d'un milieu liquide halin (i.e. salinité non nulle), comme par exemple un lac, un fleuve, la mer ou un océan.

Dans ce document on entend par « bande HF » la partie du spectre radioélectrique s'étendant de 3 MHz à 30 MHz et on entend par « bande VHF » la partie du spectre radioélectrique s'étendant de 30 MHz à 300 MHz.

### ETAT DE LA TECHNIQUE

Les radars océanographiques côtiers sont des instruments de mesure couramment utilisés pour caractériser spatialement et temporellement des paramètres de surface de mer tels que le courant de surface, l'état de mer et le vent de surface, à des résolutions spatiales comprises entre 10m et 6000m.

Ces systèmes actifs installés généralement sur des sites côtiers, fonctionnent en utilisant des fréquences porteuses comprises entre 3 MHz et 300 MHz et exploitent ainsi la propagation par ondes de surface, à la surface de la mer, pour d'atteindre des portées supérieures à l'horizon classique des systèmes fonctionnant à des fréquences supérieures (ondes UHF ou supérieures). Ils comportent un émetteur cohérent à polarisation verticale, dans certains cas directionnel, et plusieurs récepteurs à antennes statiques à polarisation verticale.

La mesure des paramètres de surface de mer à partir de ces radars est basée sur l'analyse spectrale dans le domaine Doppler du fouillis de mer. Pour chaque canal Doppler analysé par ces radars, le fouillis de mer provient d'un ensemble de sources plus ou moins étendues spatialement et plus ou moins énergétiques en fonction de leur position vis-à-vis du diagramme de rayonnement en émission, des gradients spatiaux de courants de surface, de la rugosité de surface (état de mer), de la salinité et de la température de l'eau de mer présents sur la zone observée. L'obtention d'une cartographie, spatialement résolue des phénomènes océanographiques d'intérêt passe donc par l'obtention d'une cartographie spatialement résolue de l'énergie des sources de fouillis pour chaque canal Doppler analysé.

Cette cartographie s'opère généralement en trois étapes.

La première consiste au traitement distance radar et à l'issue duquel, chacun des récepteurs du signal radar dispose d'une version du signal radar complexe échantillonnée par couronnes distances de largeur correspondant à la résolution distance du radar (de 10m à 6000m suivant les configurations).

La deuxième étape réalisée pour chaque couronne distance, consiste, à l'aide d'une série temporelle de signaux complexes, à obtenir la densité spectrale d'énergie reçue pour chaque canal Doppler d'intérêt. Cette information est obtenue pour chacune des antennes de réception du radar.

La troisième étape consiste à obtenir la répartition en direction de la densité spectrale d'énergie du fouillis de mer.

Pour certaines applications, cherchant à étudier les paramètres de surface de l'eau, un des inconvénients des procédés existant est la résolution. La haute résolution des données est importante pour étudier l'état de surface de l'eau à partir des densités spectrales du fouillis.

Certains documents de l'art antérieur proposent également des procédés d'estimation spectrale du fouillis. On connaît par exemple le la publication GAO H T ET AL: « Adaptive anti-interference technique using subarrays in HF surface wave radar », IEE PROCEEDINGS : RADAR, SONAR & NAVIGATION, INSTITUTION OF ELECTRICAL ENGINEERS, GB, vol. 151, no. 2, 9 avril 2004, pages 100-104, XP006021676, ISSN: 1350-2395. Toutefois, ce document décrit de signaux issus d'un radar océanographique sans amélioration dans la détermination de la résolution angulaire.

Il est également connu le document US2003/058153. Toutefois ce document ne décrit pas de signaux issus du fouillis d'un milieu liquide halin (i.e. salinité non nulle), tel qu'un lac, un fleuve, une mer ou un océan.

### OBJET DE L'INVENTION

La présente invention vise à remédier à ces inconvénients.

A cet effet, la présente invention vise un procédé d'estimation spectrale du fouillis d'un milieu liquide halin reçu par un radar océanographique, tel qu'un lac, un fleuve, une mer ou un océan, à partir d'un réseau d'antennes comportant au moins trois antennes.

L'invention est définie par le procédé selon la revendication 1.

Grâce à ces dispositions, le procédé permet d'obtenir pour chaque canal Doppler analysé, la répartition par direction d'arrivée, à haute résolution en direction, de la densité spectrale d'énergie du fouillis, ceci afin de pouvoir caractériser précisément et à haute résolution spatiale les paramètres de surface du milieu liquide, tel que la mer, (courant, vent, vagues) à l'origine de ce fouillis.

Dans un mode de réalisation, la deuxième étape est réitérée pour chacun des sous-réseaux du réseau d'antennes.

Dans un mode de réalisation, entre la deuxième étape et la troisième étape, le procédé comprend une sixième étape de calcul de plusieurs faisceaux par balayage pour chaque sous-réseau dans des directions différentes dont l'écart entre deux directions est un angle a.

Dans un mode de réalisation lié au précédent, l'angle α est au moins égal à 0,5°.

Dans un mode de réalisation, à la quatrième étape l'énergie est estimé par la méthode dite Estimateur pseudo inverse.

Dans un mode de réalisation, à la quatrième étape l'énergie est estimé par la méthode dite Estimateur du vecteur de covariance.

Dans un mode de réalisation, le critère prédéterminé est choisi dans le groupe suivant : énergie médiane ou énergie maximale.

Dans un mode de réalisation, le réseau d'antenne est constitué d'antennes dont la distance à la plus proche entre les antennes du réseau est comprise entre 0,4 et 0,6 fois la longueur d'onde émise par le radar.

Un exemple de réseau d'antenne de ce type est un réseau linéaire dont les antennes sont espacées régulièrement de 0,5 fois la longueur d'onde émise par le radar. Un autre exemple de réseau d'antenne de ce type est un réseau circulaire, dont les antennes sont placées régulièrement sur un cercle de rayon lambda/(4^{*}sin(pi/n)),lambda étant la longueur d'onde émise par le radar, et n le nombre d'antennes.

### BREVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :
- la figure 1 représente, sous forme de logigramme, des étapes mises en oeuvre dans un mode de réalisation particulier du procédé objet de la présente invention,
- la figure 2 représente une première étape du procédé : la formation des sous-réseaux,
- la figure 3 représente une deuxième étape du procédé : le calcul de faisceaux pour chaque sous réseau,
- la figure 4 représente une troisième et quatrième étape du procédé : la localisation en azimut et l'estimation énergétique des sources dans un faisceau,
- la figure 5 représente une cinquième étape du procédé : la sélection des sources,
- la figure 6 représente des étapes de l'implémentation du procédé dans un système radar,
- les figures 7 et 8 représentent l'estimation spectrale Doppler réalisée à partir de 4736 échantillons temporels,
- les figures 9 à 11 illustrent un exemple de mesure des courants de surface radiaux, sur l'ensemble de la couverture HF fonctionnant dans la bande 12MHz,
- les figures 12 à 14 illustrent un exemple de mesure des courants de surface radiaux, sur les premiers kilomètres de la couverture d'un radar H F fonctionnant dans la bande 12 MHz, dans la zone à forts gradients de courants.

### DESCRIPTION D'EXEMPLES DE REALISATION DE L'INVENTION

Dans cet exemple de réalisation, les radars océanographiques côtiers Doppler fonctionnent sur les bandes électromagnétiques HF ou VHF soit entre 5 MHz et 50 MHz.

La présente invention consiste à appliquer une méthode dite de recherche de direction d'arrivée dans l'espace des faisceaux ou beamspace (pour espace de faisceau) DOA (acronyme de Direction Of Arrivai pour direction d'arrivée en français), combinée à une solution d'estimation énergétique des sources pour obtenir la répartition en direction de la densité spectrale d'énergie du fouillis de mer.

Dans ce document on entend par « beamspace », mot à mot « espace des faisceaux », l'espace formé par l'ensemble des signaux produits par des sous-ensembles de récepteurs d'un système radar multi-récepteurs, dont le contenu informatif est limité à une partie seulement de l'espace angulaire des azimuts (360°).

On entend par « beamforming », mot à mot « formation de faisceau », le filtrage d'un signal reçu par plusieurs récepteurs, par application d'un déphasage et d'une pondération sur chacun de ces récepteurs, visant à ne conserver que la partie du signal incident provenant d'un sous ensemble de l'espace angulaire des azimuts (360°).

Également, dans ce document on entend par « DOA » une méthode de recherche de la direction d'arrivée, en azimut, d'un signal électromagnétique reçu par plusieurs récepteurs.

Ce procédé combine une solution de formation de faisceaux à une méthode de super-résolution.

Selon un exemple de réalisation, la méthode de formation de faisceaux utilisée est un beamforming conventionnel. La méthode de super-résolution en direction utilisée est MUSIC (marque déposée, pour Multiple Slgnal Classification).

La formation de faisceau conventionnelle (« Beamforming ») a été développée pour focaliser dans une direction l'émission d'une onde électromagnétique. Elle a été depuis exploitée pour une multitude d'applications dont l'imagerie médicale, les radars de défense et les télécommunications. Cette technique est mise en oeuvre dans les systèmes radars océanographiques WERA (pour WEllen Radar, marque déposée), dans leur version à réseaux d'antennes linéaires. Il s'agit là d'une formation de faisceaux par le calcul. Pour cela l'intervalle des directions d'intérêt est discrétisé afin d'obtenir un ensemble de directions à viser. Pour chaque direction à viser, le vecteur des signaux complexes reçu par les récepteurs du réseau linéaire d'antennes réceptrices est convolué par un vecteur de pointage, également complexe, simulant les déphasages (retards inter antennes), dus à l'espacement des antennes, attendus pour un signal provenant de la direction visée. Le module du produit de convolution réalisé fournit une estimation de la part de d'énergie incidente provenant de la direction visée. L'intérêt principal de cette méthode est de fournir une couverture exhaustive de la zone d'intérêt (aucun trou).

La technique MUSIC est une technique de recherche de direction d'arrivée et est intégrée pour la première fois dans un système radar océanographique en 1999. Plus récemment, la technique a été adaptée pour des systèmes radars WERA comportant un nombre plus élevé de récepteurs. La technique MUSIC consiste en une décomposition en sous espaces (espace signal et espace bruit) de l'espace des signaux reçus par l'ensemble des récepteurs du radar. Elle utilise une estimation de la matrice interspectrale des signaux des différents récepteurs et nécessite de connaître le nombre de sources à localiser, ou de l'estimer à l'aide des valeurs propres de la matrice interspectrale. Elle retourne les directions de provenance des sources à localiser. L'énergie de chaque source peut ensuite être estimée par différentes méthodes telles qu'un Estimateur pseudo inverse ou un Estimateur du vecteur de covariance. L'intérêt principal de cette technique est sa très bonne résolution en direction.

L'intérêt de ce procédé est de combiner les avantages de la méthode de formation de faisceaux et de la méthode de super-résolution.

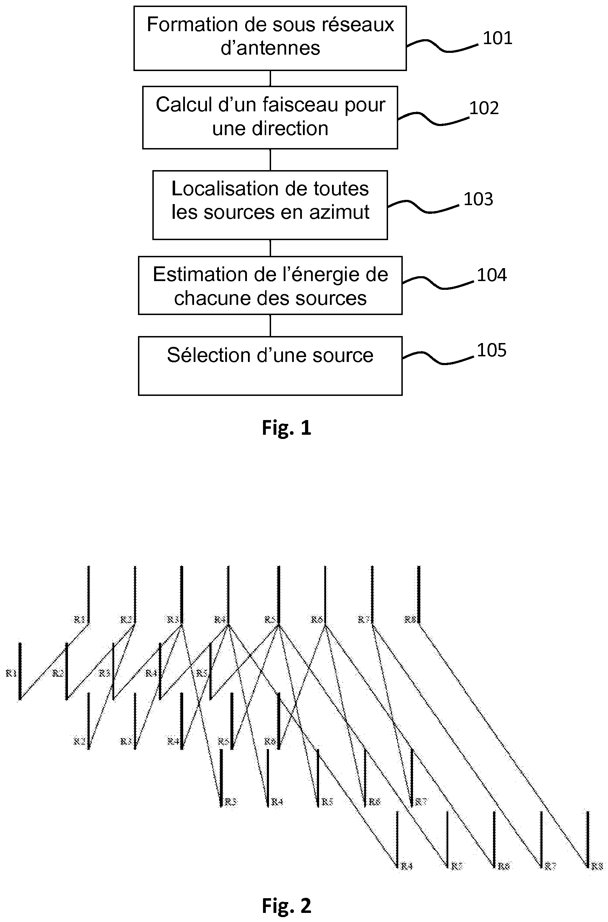

La figure 1 représente, sous forme de logigramme, des étapes mises en oeuvre dans un mode de réalisation particulier du procédé objet de la présente invention et comporte :
- une première étape 101 de formation de sous réseaux d'antennes,
- une deuxième étape 102 de calcul d'un faisceau pour une direction,
- une troisième étape 103 de localisation de toutes les sources en azimut,
- une quatrième étape 104 d'estimation de l'énergie de chacune des sources.
- une cinquième étape 105 de sélection d'une source selon un critère prédéterminé lorsqu'il y a plusieurs sources pour un même faisceau.

Ces étapes sont décrites dans la description ci-dessous.

Dans cet exemple de réalisation, on se limite au cadre des radars océanographiques comportant des antennes de réception à diagrammes de réception identiques. La seule différence considérée entre les différentes antennes de réception est donc leur position. Les seules variations relatives de position considérées entre antennes sont des variations dans un plan horizontal vis-à-vis du front d'onde reçu provenant de la zone maritime observée.

La figure 2 représente une première étape du procédé : la formation des sous-réseaux.

A partir du réseau de réception du radar, noté R1 à R8, un jeu de sous-réseaux est construit. Dans le cas d'un réseau linéaire de réception de huit antennes, chaque sous-réseau peut par exemple être constitué de cinq antennes. On obtient ainsi quatre sous-réseaux.

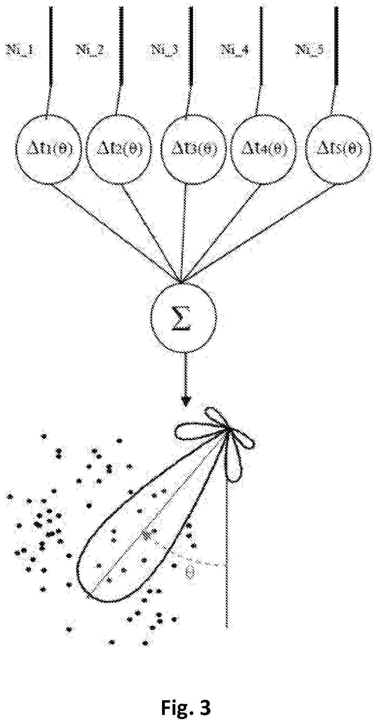

La figure 3 représente une deuxième étape du procédé : le calcul de faisceaux pour une direction et pour chaque sous réseau.

Les sous-réseaux constituent des antennes synthétiques qui vont pointer successivement, de manière exhaustive, dans les différents secteurs de la zone angulaire observée par le radar.

Le résultat de la somme est représenté et représente le résultat d'un faisceau du réseau virtuel i sous l'angle θ ne contenant qu'une partie des sources.

Ce pointage est effectué par un beamforming conventionnel utilisant une fenêtre d'apodisation permettant d'obtenir un lobe principal uniforme en énergie avec des lobes secondaires sensiblement atténués. Le pas angulaire entre chaque pointage est inférieur à la résolution à -3dB du lobe principal des faisceaux formés, il y a donc recouvrement partiel en direction entre les différents faisceaux de pointage.

Ce pointage constitue un filtrage spatial permettant d'éliminer du signal une partie des sources présentes sur la zone angulaire observée par le radar, notamment les sources très énergétiques sur lesquelles MUSIC tend à se focaliser en priorité.

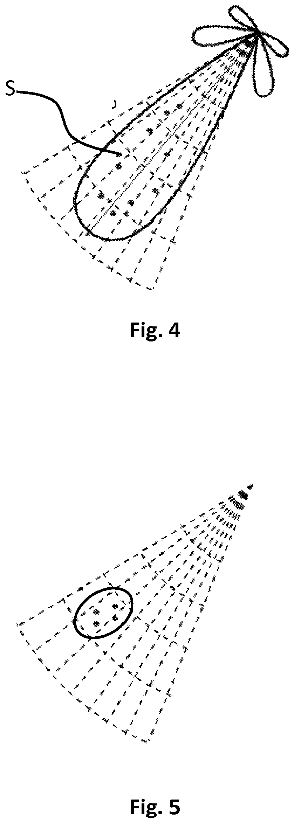

La figure 4 représente une troisième et quatrième étape du procédé : la localisation en azimut et l'estimation énergétique des sources dans un faisceau.

Pour chaque pointage effectué, les signaux complexes reçus par les sous-réseaux (quatre dans cet exemple) sont traités par l'algorithme MUSIC. Les sources S (sur la figure une seule source S est pointée) présentes dans le faisceau pointé par les antennes synthétiques sont localisées précisément en direction grâce à MUSIC et leur énergie est estimée par la méthode dite Estimateur pseudo inverse.

La figure 5 représente une cinquième étape du procédé : la sélection des sources.

En fin de traitement du procédé, puisque qu'il y a recouvrement partiel en direction entre les différents faisceaux de pointage, il arrive que plusieurs sources aient été localisées par MUSIC à la même direction, auquel cas le critère prédéterminé est l'énergie la plus forte des différentes sources retenues.

Selon une autre variante, le critère prédéterminé est choisi dans le groupe suivant : énergie médiane ou énergie maximale.

Le procédé de traitement ne fournit pas une estimation spectrale sans trou sur toutes les directions d'intérêt, comme le fait le beamforming conventionnel. Il fournit cependant une couverture en direction plus exhaustive que celle obtenue avec l'algorithme MUSIC seul tout en conservant une résolution angulaire élevée proche de celle obtenue par MUSIC seul.

Le procédé a été appliqué pour des données provenant d'un système radar WERA à seize voies de réception.

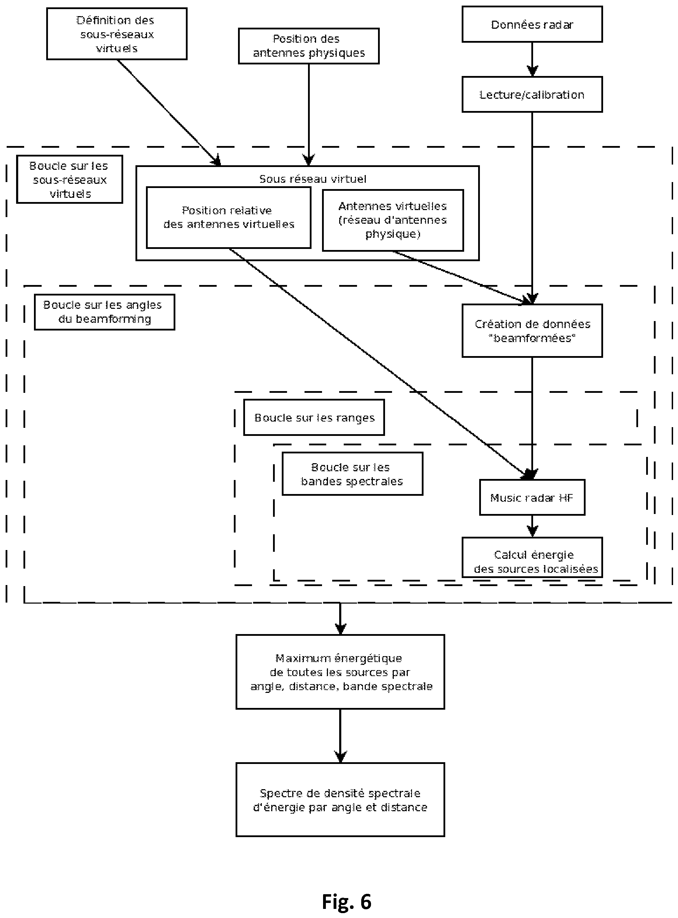

La figure 6 représente des étapes de l'implémentation du procédé dans un système radar.

Dans ce cas particulier le système monostatique fonctionnant dans la bande 12 MHz comporte un diagramme d'émission directionnel de largeur 130° en azimut à -20dB. Il fonctionne à une résolution spatiale de 1,5 Km. La direction centrale d'émission est l'azimut 249°.

Le fouillis de mer de premier ordre sur cette zone se caractérise par :
- un nombre élevé de sources peu étendues spatialement dans les 30 premiers kilomètres de portée, particulièrement dans la zone la plus énergétique du lobe d'émission. Ce nombre élevé de sources est dû à de forts gradients spatiaux de courants de marée sur cette zone.
- un nombre faible de sources étendues spatialement ailleurs, dû à des courants de surface relativement homogènes dans ces zones.

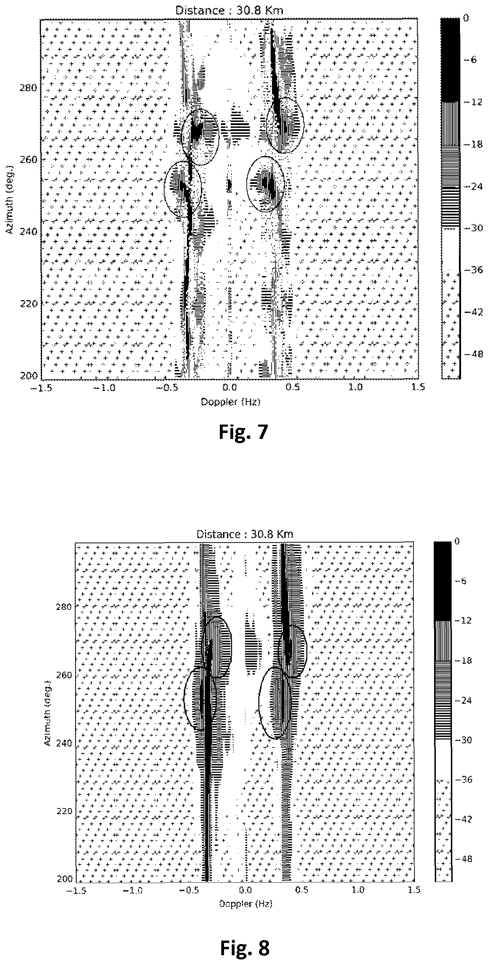

Les figures 7 et 8 représentent l'estimation spectrale Doppler réalisée à partir de 4736 échantillons temporels, à la case distance 30.8 Km par les procédés :
- selon un exemple de réalisation de l'invention avec 5 sous-réseaux de 12 récepteurs, voir figure 7 ;
- selon un exemple de réalisation de l'art antérieur à l'aide d'un beamforming conventionnel avec les 16 récepteurs, voir figure 8.

Les cercles indiquent une amélioration de la résolution azimutale des structures énergétiques.

Les figures 7 et 8 mettent en évidence le gain en résolution azimutale, supérieur à un coefficient 2, obtenu avec l'exemple de réalisation de l'invention dans cette configuration.

Un exemple d'application est la courantologie côtière à haute résolution spatiale et a donc vocation à être intégré dans un système radar océanographique côtier dédié à la cartographie en temps réel à haute résolution des courants de surface.

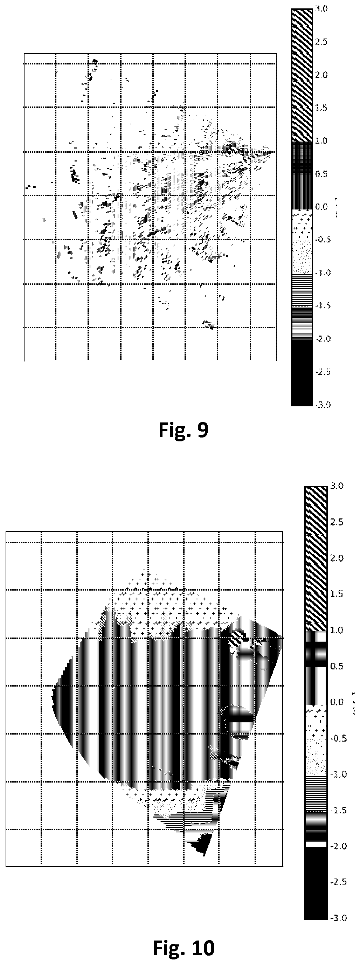

Les figures 9 à 11 illustrent un exemple de mesure des courants de surface radiaux, sur l'ensemble de la couverture HF fonctionnant dans al bande 12MHz.

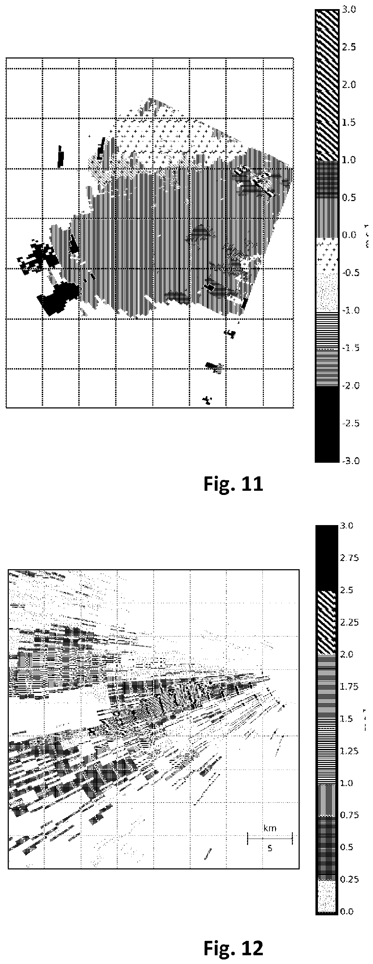

La figure 9 représente une étape de procédé de l'art antérieur à l'aide de la décomposition en sous espaces MUSIC seule. La figure 10 représente une étape de procédé de l'art antérieur à l'aide d'un beamforming seul. La figure 11 illustre une étape du précédé selon un exemple de réalisation.

De manière générale, le Beamforming présente l'inconvénient d'être peu résolu en direction, même en exploitant le nombre maximum de récepteurs typiquement utilisé pour les radars océanographiques (16 à l'heure actuelle). En effet, sous hypothèse de réseau linéaire de réception espacé régulièrement d'une demi longueur d'onde, et sous apodisation rectangulaire des signaux des 16 récepteurs, la meilleure résolution azimutal a -3dB, atteinte pour une direction de visée orthogonale au réseau d'antenne est de 6°. Pour une direction de visée de 45° elle passe à 9°. A 20Km du radar, cette résolution correspond à une résolution azimutale supérieure à 3 Km, soit supérieure à la majorité des résolutions distances implémentées sur les radars HF océanographiques.

De manière générale, la méthode à décomposition en sous-espaces MUSIC présente elle l'inconvénient d'être fortement sensible à l'énergie des sources. Dans le cas d'un émetteur directionnel, ou d'une forte dynamique de l'énergie des sources le long de la dimension angulaire, cet inconvénient se manifeste par une surconcentration des sources dans une partie du secteur angulaire observé, zone où les sources sont les plus énergétiques, ce qui dégrade fortement le taux de couverture notamment en bordure du lobe d'émission. L'estimation spectrale réalisée comporte donc un taux de remplissage faible qui rend nécessaire l'utilisation d'un interpolateur en post-traitement.

Les figures 12 à 14 illustrent un exemple de mesure des courants de surface radiaux, sur les premiers kilomètres de la couverture d'un radar H F fonctionnant dans la bande 12 MHz, dans la zone à forts gradients de courants.

La figure 12 représente une étape de procédé de l'art antérieur à l'aide de la décomposition en sous espaces MUSIC seule.

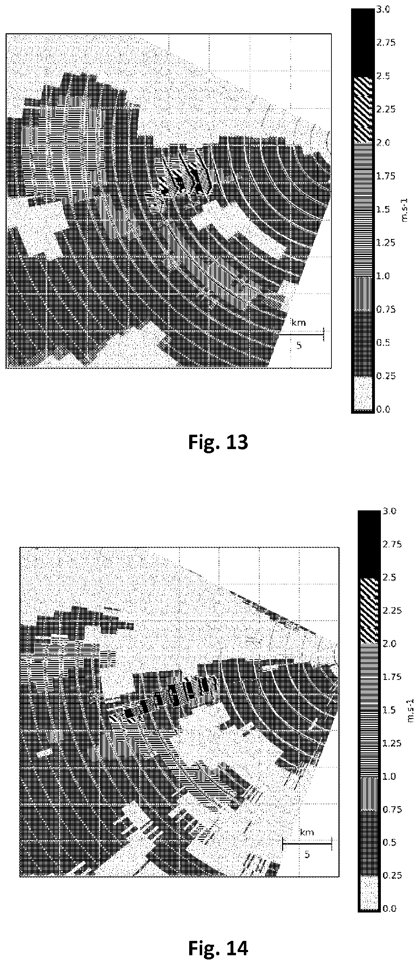

La figure 13 représente une étape de procédé de l'art antérieur à l'aide d'un beamforming seul. La figure 14 illustre une étape du précédé selon un exemple de réalisation.

Les figures 11 et 14 mettent en évidence que la résolution spatiale des mesures et le taux de couverture spatial sont augmentés par rapport aux solutions antérieures.

Parmi les applications industrielles faisant appel à la courantologie côtière à haute résolution spatiale on peut citer :
- Industrie des EMR (acronyme d'Energies Marines Renouvelables : i) hydrolien : évaluation de la ressource de productible et optimisation du positionnement des hydroliennes (phase de développement), ii) soutien aux opérations en mer d'installation et maintenance d'un champ EMR (phases de construction et d'exploitation), iii) contribution à la prévision à court terme du productible (phase d'exploitation)
- Industrie pétrolière et gazière offshore : i) sécurité et optimisation des opérations en mer, ii) soutien à la gestion de crise environnementale. Intégré dans un radar océanographique HF, la résolution spatiale obtenue grâce à ce procédé doit permettre de localiser à longue portée les courants induits par des phénomènes de type « ondes internes » susceptibles de perturber les opérations maritimes offshore.
- Portuaire: sécurité et optimisation des opérations en mer : Intégré dans un radar océanographique H F ou VHF, le procédé permet d'accroître la résolution spatiale des cartes de courants de surface utilisés pour la validation des modèles hydrodynamiques côtiers.

## Revendications

1. Procédé d'estimation spectrale du fouillis d'un milieu liquide halin reçu par un radar océanographique, tel qu'un lac, un fleuve, une mer ou un océan, à partir d'un réseau d'antennes comportant au moins trois antennes, comportant les étapes suivantes :
- une première étape (101) de formation d'au moins deux sous-réseaux d'antennes à partir du réseau d'antennes, chacun des sous-réseaux comportant au moins une antenne de moins que le réseau d'antennes ;
- une deuxième étape (102) de calcul d'un faisceau dans une direction pour chaque sous réseau d'antenne, à partir d'une technique de formation de faisceau, du type beamforming ;
- une troisième étape (103) de localisation en azimut de toutes sources comprise dans le faisceau à partir des données du faisceau provenant de chacun des sous-réseaux, l'azimut de la source est localisé par un algorithme de classification multiple des signaux dit MUSIC ;
- une quatrième étape (104) d'estimation de l'énergie de chacune des sources localisées ;
le procédé étant **caractérisé en ce qu'**il contient
- une cinquième étape (105) de sélection d'une source, dite source préférée, parmi plusieurs sources selon un critère prédéterminé lorsque le faisceau comporte plusieurs sources, le critère prédéterminé étant l'énergie la plus forte lorsque plusieurs sources ont la même direction.

2. Procédé selon la revendication 1, dans lequel la deuxième étape est réitérée pour chacun des sous-réseaux du réseau d'antennes.

3. Procédé selon la revendication 1, dans lequel entre la deuxième étape et la troisième étape, le procédé comprend une sixième étape de calcul de plusieurs faisceaux par balayage pour chaque sous-réseau dans des directions différentes dont l'écart entre deux directions est un angle a.

4. Procédé selon la revendication 3, dans lequel l'angle α est au moins égal à 0,5°.

5. Procédé selon la revendication 1, dans lequel à la quatrième étape l'énergie est estimé par la méthode dite Estimateur pseudo inverse.

6. Procédé selon la revendication 1, dans lequel à la quatrième étape l'énergie est estimé par la méthode dite Estimateur du vecteur de covariance.

7. Procédé selon la revendication 1, dans lequel le critère prédéterminé est choisi dans le groupe suivant : énergie médiane ou énergie maximale.

8. Procédé selon la revendication 1, dans lequel le réseau d'antenne est constitué d'antennes dont la distance à la plus proche entre les antennes du réseau est comprise entre 0,4 et 0,6 fois la longueur d'onde émise par le radar.

## Patentansprüche

1. Verfahren zur spektralen Schätzung der durch einen ozeanografischen Radar empfangenen Störungen eines halinen flüssigen Mediums wie ein See, ein Fluss, ein Meer oder ein Ozean auf der Basis eines Antennennetzwerks, das mindestens drei Antennen aufweist, aufweisend die folgenden Schritte:
- einen ersten Schritt (101) des Bildens von mindestens zwei Antennenunternetzwerken auf der Basis des Antennennetzwerks, wobei jedes der Unternetzwerke mindestens eine Antenne weniger als das Antennennetzwerk aufweist;
- einen zweiten Schritt (102) des Berechnens eines Strahls in einer Richtung für jedes Antennenunternetzwerk auf der Basis einer Strahlbildungstechnik vom Typ Beamforming;
- einen dritten Schritt (103) der Azimutlokalisierung aller Quellen inklusive in dem Strahl auf der Basis der Daten des Stahls, der von jedem der Unternetzwerke kommt, wobei der Azimut der Quelle von einem als MUSIC bezeichneten Multiple signal classification-Algorithmus lokalisiert wird;
- einen vierten Schritt (104) der Schätzung der Energie jeder der lokalisierten Quellen;
wobei das Verfahren **dadurch gekennzeichnet ist, dass** es enthält
- einen fünften Schritt (105) der Auswahl einer Quelle, bezeichnet als bevorzugte Quelle, aus mehreren Quellen gemäß einem vorher festgelegten Kriterium, wenn der Strahl mehrere Quellen aufweist, wobei das vorher festgelegte Kriterium die stärkste Energie ist, wenn mehrere Quellen dieselbe Richtung haben.

2. Verfahren nach Anspruch 1, wobei der zweite Schritt für jedes der Unternetzwerke des Antennennetzwerks wiederholt wird.

3. Verfahren nach Anspruch 1, wobei das Verfahren zwischen dem zweiten Schritt und dem dritten Schritt einen sechsten Berechnungsschritt mehrerer Strahlen durch Scanning für jedes Unternetzwerk in unterschiedlichen Richtungen umfasst, wobei der Abweichung zwischen zwei Richtungen ein Winkel α ist.

4. Verfahren nach Anspruch 3, wobei der Winkel α mindestens gleich 0,5° beträgt.

5. Verfahren nach Anspruch 1, wobei beim vierten Schritt die Energie anhand der pseudoinversen Schätzmethode geschätzt wird.

6. Verfahren nach Anspruch 1, wobei beim vierten Schritt die Energie anhand der Covarianzvektor-Schätzmethode geschätzt wird.

7. Verfahren nach Anspruch 1, wobei das vorher festgelegte Kriterium aus der folgenden Gruppe ausgewählt wird: mittlere Energie oder maximale Energie.

8. Verfahren nach Anspruch 1, wobei das das Antennennetzwerk aus Antennen besteht, deren nächster Abstand zwischen den Antennen des Netzwerks zwischen dem 0,4- und 0,6fachen der von dem Radar gesendeten Wellenlänge liegt.

## Claims

1. A method for spectral estimation of the clutter of a haline liquid medium received by an oceanographic radar, such as a lake, a river, a sea or an ocean, from an antenna array including at least three antennas, including the following steps:
- a first step (101) of forming at least two antenna sub-arrays from the antenna array, each of the sub-arrays including at least one antenna less than the antenna array;
- a second step (102) of calculating a beam in one direction for each antenna sub-array, from a beamforming-type beam forming technique;
- a third step (103) of locating the azimuth of all sources comprised within the beam from the data of the beam coming from each of the sub-arrays, the azimuth of the source is located by a so-called MUSIC, multiple signal classification, algorithm;
- a fourth step (104) of estimating the energy of each of the located sources;
the method being **characterised in that** it contains
- a fifth step (105) of selecting a source, called preferred source, among several sources according to a predetermined criterion when the beam includes several sources, the predetermined criterion being the highest energy when several sources have the same direction.

2. The method according to claim 1, wherein the second step is reiterated for each of the sub-arrays of the antenna array.

3. The method according to claim 1, wherein, between the second step and the third step, the method comprises a sixth step of calculating several beams by scanning for each sub-array in different directions where the deviation between two directions is an angle α.

4. The method according to claim 3, wherein the angle α is at least equal to 0.5°.

5. The method according to claim 1, wherein in the fourth step the energy is estimated by the so-called pseudo-inverse Estimator method.

6. The method according to claim 1, wherein in the fourth step the energy is estimated by the so-called covariance vector Estimator method.

7. The method according to claim 1, wherein the predetermined criterion is selected from the following group: median energy or maximum energy.

8. The method according to claim 1, wherein the antenna array consists of antennas whose distance to the closest one among the antennas of the array is comprised between 0.4 and 0.6 times the wavelength emitted by the radar.
